# EUROPÄISCHE PATENTSCHRIFT

(11) **EP 3 657 094 B1**
(45) Veröffentlichungstag und Bekanntmachung des Hinweises auf die Patenterteilung: **05.01.2022**
(21) Anmeldenummer: 19211397.5
(22) Anmeldetag: 26.11.2019
(51) Int. Cl.: F24T 10/10, F24T 50/00, F28D 11/00, F28D 20/00

(54) **VERFAHREN ZUR NUTZUNG DER OBERFLÄCHENNAHEN GEOTHERMIE FÜR DIE BEHEIZUNG UND/ODER KÜHLUNG UND/ODER ERWÄRMUNG VON TRINKWARMWASSER VON EINEM ODER MEHREREN GEBÄUDEN**
METHOD FOR UTILISING NEAR-SURFACE GEOTHERMAL HEAT FOR HEATING AND / OR COOLING AND / OR WARMING HOT DRINKING WATER FROM ONE OR MORE BUILDINGS
PROCÉDÉ D'UTILISATION DE LA GÉOTHERMIE EN SURFACE POUR LE CHAUFFAGE ET/OU LE REFROIDISSEMENT ET/OU RÉCHAUFFEMENT DE L'EAU CHAUDE SANITAIRE D'UN OU D'UNE PLURALITÉ DE BÂTIMENTS

(30) Priorität: 26.11.2018 DE 102018129822
(43) Veröffentlichungstag der Anmeldung: 27.05.2020
(73) Patentinhaber: Steinhäuser GmbH & Co. KG, 96120 Bischberg (DE)
(72) Erfinder: Steinhäuser, Johann Harry, 96179 Rattelsdorf (DE)
(74) Vertreter: Hauck Patentanwaltspartnerschaft mbB

(56) Entgegenhaltungen:
- DE-A1- 10 209 373
- DE-A1-102005 049 930
- DE-A1-102011 013 275
- DE-U1-202006 020 777
- FR-A1- 2 325 882
- FR-A1- 2 444 234

## Beschreibung

Die Erfindung betrifft ein Verfahren zur Nutzung der oberflächennahen Geothermie für die Beheizung und/oder Kühlung und/oder Erwärmung von Trinkwarmwasser von einem oder mehreren Gebäuden.

Bei der Erdwärmeheizung mithilfe von Erdkollektoren (Erdwärmekollektoren) wird dem Erdreich mittels der Erdkollektoren Wärme entzogen, die von einer Wärmepumpe auf ein höheres Temperaturniveau angehoben wird, sodass sie für die Beheizung eines oder mehrerer Gebäude oder einer anderen Einrichtung verwendet werden kann. Alternativ kann die oberflächennahe Geothermie auch zum passiven Kühlen oder mit einer reversiblen Wärmepumpe sogar zum aktiven Kühlen verwendet werden. Erdkollektoren bestehen im Wesentlichen aus einem Rohr mit einem meistens schlaufenförmigen, spiralförmigen oder mäanderförmigen Verlauf, das im Regelfall in einer Tiefe von 1 bis 1,5 m unter der Erdoberfläche, in Sonderfällen auch noch tiefer, verlegt ist. In diesen Tiefen liegen Anfang Februar bei ungestörten Bodenverhältnissen Temperaturen von 2° bis 5 °C und im August von 12° bis 15 °C vor. Als Wärmeträger wird ein Gemisch aus Wasser und Frostschutzmittel (z.B. Glykol) verwendet, um im Winter ein Einfrieren des Wärmeträgers im Rohr zu vermeiden, gleichzeitig jedoch die Nutzung der Phasenumwandlungsenthalpie der im Erdreich zur Verfügung stehenden Feuchte zu ermöglichen. Die aus der Umgebung, insbesondere von Regen und Sonne, ins Erdreich eingebrachte Wärme geht in den Erdkollektoren auf den Wärmeträger über und wird von dem Wärmeträger zur Wärmepumpe transportiert. Diese Art der Erdwärmeheizung wird auch als "kalte Nahwärmenutzung" (KNW) bezeichnet, wenn mehrere Gebäude auf diese Weise aus einer gemeinsamen Kollektoranlage und einem Verteilnetz versorgt werden. Bei Versorgung von nur einem Gebäude handelt es sich um eine konventionelle Geothermie-Nutzung.

Für die Erdwärmeheizung mehrerer Wohneinheiten in Ein-, Zwei-, Reihen- und Mehrfamilienhäusern oder ganzen Siedlungen werden entsprechend große Anordnungen von Erdkollektoren benötigt. Wegen des guten Wärmeüberganges werden Anordnungen von Erdkollektoren für Großanlagen bevorzugt außerhalb der Siedlungen in Freiflächen angeordnet, bei denen keine Gefahr einer späteren Umnutzung besteht. Beispielhaft seien hierfür Ackerflächen, Regenrückhaltebecken und Streuobstwiesen genannt. Derartige Anordnungen werden auch als "Energiefelder" bezeichnet.

Die DE 10 2011 013 274 A1 und die DE 20 2011 105 124 U1 beschreiben ein Erdkollektorsystem, das eine im Grundwasserbereich angeordnete, erste Erdkollektorvorrichtung und eine darüber angeordnete, zweite Erdkollektorvorrichtung aufweist. Die zweite Erdkollektorvorrichtung entzieht die Wärmeenergie dem durch die Erdoberfläche einsickernden Wasser und die erste Erdkollektorvorrichtung entzieht die Wärmeenergie dem Grundwasser.

Unter der Bezeichnung eTank ist in der EP 2 713 110 B1 eine Speichertechnik beschrieben, die einen Energiespeicher umfasst, der unter der Bodenplatte oder neben dem Gebäude ausgebildet wird. Dieser besteht aus mehreren Schichten Erdreich, die bis zu einer Tiefe von ca. 1,5 m reichen, und in denen Polyethylen-Leitungen verlegt sind. Nach oben und zu den Seiten hin ist der Energiespeicher mit einer dauerhaften Dämmung versehen, um unerwünschte Wärmeverluste an die Umgebung zu reduzieren. Nach unten ist er zum angrenzenden Erdreich hin offen. Über die mit Sole-Flüssigkeit gefüllten Leitungen wird das Erdreich durch Solarthermie und/oder einem Abluft-Wärmepumpensystem erwärmt. Bei Heizbedarf wird die im Erdreich gepufferte Energie über eine Wärmepumpe nutzbar gemacht und in das Heizsystem eingespeist. Im Sommer kann das System zur Kühlung verwendet werden. Für die Herstellung des Energiespeichers muss eine große Grube von bis zu 1,5 m Tiefe ausgehoben werden, die Leitungen in mehreren Ebenen darin verlegt, die Grube in Schichten wieder verfüllt und seitlich und oben mit Dämmmaterial abgeschlossen werden. Der Energiespeicher speichert ausschließlich die Wärme einer Solarthermieanlage und/oder einer Abluft-Wärmepumpe, die ihm über die Leitungen zugeführt wird. Eine Regeneration durch natürliche Prozesse (bspw. Sonneneinstrahlung und Regen) ist nicht vorgesehen und könnte aufgrund der Dämmung und Wärmespeicherung aus regenerativen Energiequellen auch keinen nennenswerten Beitrag zur Beladung des Energiespeichers leisten. Zudem ist die Form der Regeneration auf die beiden oben genannten Verfahren begrenzt.

Die EP 1 972 869 A2 beschreibt einen Erdkollektor, der mindestens zwei parallel oder in vorbestimmten Winkeln zueinander angeordnete Gitterelemente aufweist, die mittels Verbindungsstegen miteinander verbunden und voneinander beabstandet sind. Mindestens ein Rohr ist an den jeweiligen einzelnen Gitterelementen ungefähr mäander- oder schneckenförmig angeordnet und befestigt, derart, dass das Rohr eine der Anzahl der Gitterelemente entsprechende Anzahl an Verlaufsebenen ausbildet und durchläuft. Das flexible Rohr leitet ein Wärmeträgermedium und ist an einem Ende mit einem Vorlaufrohr und am anderen Ende mit einem Rücklaufrohr verbunden, die mit der Wärmepumpe eines Gebäudes verbunden sind. Zusätzlich ist an mindestens einem Gitterelement im Bereich des Rohrs ein zweites Rohrsystem zur Übertragung von Wärme aus einem Solarkollektor angeordnet und befestigt. Das zweite Rohrsystem ist gesondert an einen Solarkollektor angeschlossen.

Die DE 103 43 544 B1 beschreibt eine geothermische Kraftwerksanlage zur Gewinnung von elektrischem Strom und Prozesswärme, die mindestens eine wärmetauschende Vorrichtung zur Auskopplung von Wärme aus dem geothermischen Bereich und mindestens eine wärmetauschende Vorrichtung zur Rückführung von Prozesswärme in den geothermischen Bereich aufweist.

Die FR 2 325 882 A1 beschreibt einen Wärmespeicher mit einem in einer Sandschicht angeordneten Rohrwärmetauscher und einem in einer darüber angeordneten Erdschicht angeordneten Rohrwärmetauscher. Wärme wird mittels eines Wärmeträgerfluids über den unteren Wärmetauscher der Sandschicht zugeführt. Mittels des oberen Wärmetauschers wird die in der Sandschicht gespeicherte Wärme von einem Wärmeträgerfluid aufgenommen und an einen Verbraucher übertragen.

Die FR 2 444 234 A1 beschreibt eine Heizungsanlage mit Sonnenkollektoren, die über Leitungen mit einem Primärspeicher und einem darüber im Boden angeordneten Sekundärspeicher verbunden sind. Der Primärspeicher umfasst Rohrleitungen, die in einem Gemisch aus Erdreich und Kies angeordnet und von einer dichten Umhüllung umgeben sind. Der Sekundärspeicher hat ein kleineres Volumen und umfasst Matten aus Rohrleitungen, die von einer dichten Umhüllung umgeben sind. Der Sekundärspeicher dient dazu, die Wärmeverluste des Primärspeichers zu begrenzen. Um den thermischen Isoliereffekt zu verbessern, steht der Sekundärspeicher seitlich über den Primärspeicher über.

Die DE 10 2005 049 930 A1 beschreibt eine Einrichtung zur Gewinnung von Wärme durch verwertbare Energie mit einem in Schlamm eingebetteten Erdwärmesammler mit einer erneuerbare Energie gewinnenden Einrichtung, deren Strömungsmittel dem Erdwärmesammler zugeführt wird, wenn es die Temperatur im Erdwärmesammler übersteigt und nicht anderweitig benötigt wird. Die erneuerbare Energie gewinnende Einrichtung kann als unmittelbar unter der Erdbodenfläche angebrachter Sonnenwärmesammler ausgebildet sein.

Davon ausgehend liegt der Erfindung die Aufgabe zugrunde, ein Verfahren zur Nutzung der oberflächennahen Geothermie für die Beheizung und/oder Kühlung und/oder Erwärmung von Trinkwarmwasser von einem oder mehreren Gebäuden zu schaffen, das einen geringeren baulichen Aufwand aufweist und weniger abhängig von Wärmeenergie aus zusätzlichen Energieanlagen ist.

Gemäß der Erfindung wird die Aufgabe durch ein Verfahren mit den Merkmalen des Anspruchs 1 gelöst. Vorteilhafte Ausführungsarten der Erfindung sind in Unteransprüchen angegeben.

Bei dem erfindungsgemäßen Verfahren zur Nutzung der oberflächennahen Geothermie für die Beheizung und/oder Kühlung und/oder Erwärmung von Trinkwarmwasser von einem oder mehreren Gebäuden mit in mehreren Wärmespeicherschichten übereinander angeordneten Erdkollektoren wird für die Beheizung eines oder mehrerer Gebäude dem Erdreich durch die Erdkollektoren in mindestens einer Wärmespeicherschicht Wärme entzogen und erfolgt die Regeneration des Erdreiches zumindest zeitweilig in zumindest einer erste Erdkollektoren enthaltenden ersten Wärmespeicherschicht mithilfe von über zumindest einen Bereich der Oberfläche des Erdreichs flächig verteilt dem Erdreich zugeführter Wärme und zugleich in zumindest einer unterhalb der ersten Wärmespeicherschicht angeordneten, zweite Erdkollektoren enthaltenden, zweiten Wärmespeicherschicht mithilfe von Wärmeabgabe von den zweiten Erdkollektoren an die zweite Wärmespeicherschicht, wobei die ersten Erdkollektoren an die erste Wärmespeicherschicht keine oder weniger Wärme als die zweiten Erdkollektoren an die zweite Wärmespeicherschicht abgeben und für die Beheizung von Gebäuden dem Erdreich Wärme zumindest zeitweilig durch die Erdkollektoren in sämtlichen Wärmespeicherschichten entzogen wird.

In dieser Anmeldung werden die ersten und zweiten Erdkollektoren gemeinsam auch als "Erdkollektoren" und die ersten und zweiten Wärmespeicherschichten gemeinsam auch als "Wärmespeicherschichten" bezeichnet. Mit "Erdkollektor" sind im Erdboden z.B. in Strängen verlegte Rohre oder Rohrschlangen, Erdkollektormodule bestehend im Wesentlichen aus an Trägern gehaltenen Rohrschlangen (z.B. Boden-Klima-Tauscher oder Spiralkollektoren), Kapillarrohrmatten und andere Wärmetauscher zum Austauschen von Wärme mit dem Erdreich bezeichnet. Mit "einem oder mehreren Gebäuden" sind insbesondere Wohngebäude (z.B. Einfamilienhäuser, Mehrfamilienhäuser, Einzelhäuser, Doppelhäuser, Geschosswohnungsbau), Alten- und Studentenwohnheime, Krankenhäuser, Hotels, Schul-, Hochschul-, Büro-, Industrie-oder Gewerbegebäude, aus mehreren Gebäuden bestehende Siedlungen, Hotel- oder Wohnanlagen, Schul-, Hochschul-, Büro-, Industrie- oder Gewerbekomplexe oder - zentren oder ganze Stadtteile (Quartiere) bezeichnet.

Dadurch, dass die Erdkollektoren in mehreren Wärmespeicherschichten übereinander angeordnet sind, wird das für die Wärmegewinnung nutzbare Erdvolumen ohne Vergrößerung der von der Kollektoranlage eingenommenen Fläche erhöht. Infolgedessen eignet sich das Verfahren insbesondere dann, wenn wenig Fläche für den Einbau von Erdkollektoren im Erdreich zur Verfügung steht und/oder eine große Anzahl von Gebäuden mittels der Erdkollektoren beheizt und/oder gekühlt und/oder mit Trinkwarmwasser versorgt werden muss. Da das Erdreich durch die Entnahme von Wärme abkühlt, muss es durch Zufuhr von Wärme regeneriert werden, um Wärme für die Beheizung von Gebäuden entnehmen zu können. Die Regeneration des Erdreiches in der höher gelegenen, ersten Wärmespeicherschicht erfolgt mithilfe von über zumindest einen Bereich der Oberfläche des Erdreichs flächig verteilt dem Erdreich zugeführter Wärme. Gemäß einer vorteilhaften Ausführungsart der Erfindung handelt es sich hierbei um Wärmezufuhr in den Erdboden durch auf die Oberfläche des Erdreichs einwirkende Sonneneinstrahlung, Niederschlag (z.B. Regen, Hagel, Schnee, Tau), Lufttemperatur und andere natürliche Prozesse. Gemäß einer weiteren Ausführungsart der Erfindung handelt es sich hierbei um Wärme, die von einem Bauwerk über einen Teil der Oberfläche auf das Erdreich übertragen wird. Die natürlichen Prozesse, die Wärmeübertragung von einem Bauwerk und der Wärmeübergang vom Grundwasser würden nicht ausreichen, das Erdreich in tiefer gelegenen, zweiten Wärmespeicherschicht in gleichem Ausmaß zu regenerieren, wie in der ersten Wärmspeicherschicht. Deshalb sieht die Erfindung vor, zumindest zeitweilig zugleich mit der Regeneration der ersten Wärmespeicherschicht mithilfe natürlicher Prozesse die Regeneration der zweiten Wärmespeicherschicht mithilfe von Wärmeabgabe von den zweiten Erdkollektoren an die zweite Wärmespeicherschicht durchzuführen. Hierbei geben die ersten Erdkollektoren an die erste Wärmespeicherschicht bevorzugt keine oder weniger Wärme als die zweiten Erdkollektoren an die zweite Wärmespeicherschicht ab, da die erste Wärmespeicherschicht in besonders starkem Ausmaß von über die Oberfläche dem Erdreich zugeführter Wärme regeneriert wird. Hierdurch kann eine gleichmäßige Regeneration sämtlicher Wärmespeicherschichten erreicht werden. Es versteht sich, dass die Regeneration der zweiten Wärmespeicherschicht zum Teil auch mithilfe der über die Oberfläche dem Erdreich zugeführte Wärme erfolgt, da hierbei die Wärme von der Oberfläche des Erdreichs aus mit der Zeit immer tiefer in das Erdreich eindringt. Die durch die Oberfläche des Erdreiches und durch die Wärmeabgabe von den Erdkollektoren eingebrachte Regenerationswärme kann über lange Zeit im Erdreich gespeichert und sogar saisonal verschoben werden, d.h. im Sommer eingespeist und im Winter entnommen. Dadurch, dass das Erdreich in der ersten Wärmespeicherschicht aufgrund der natürlichen Prozesse oder der durch ein Bauwerk übertragenen und somit dem Erdreich zugeführten Wärme in der Regel wärmer ist als in der zweiten Wärmespeicherschicht, wird ein Abfließen der in die zweite Wärmespeicherschicht eingeleiteten Wärmeenergie verhindert und gleichsam eine Art physikalische Wärmeisolierung ohne aufwändige zusätzliche physische Dämmung erreicht. Der Wärmeabfluss ins Grundwasser kann gering gehalten werden, da die zweite Wärmespeicherschicht auf einer Tiefe von etwa 3 bis 4 m angeordnet werden kann und der Grundwasserspiegel in der Regel tiefer liegt. Besonders vorteilhaft wird das Verfahren dort durchgeführt, wo der Grundwasserspiegel entsprechend tief liegt und/oder die Fließgeschwindigkeit des Grundwassers gering ist bzw. es sich um stehendes Grundwasser handelt. Das Verfahren kann insbesondere zur Speicherung von Abwärme verwendet werden, die bei passiver Kühlung von Gebäuden mithilfe von vorhandenen Flächenheizsystemen ("Naturkühlung") gewonnen und über einen Wärmetauscher in das KNW-Netz eingespeist wird.

Das Verfahren nutzt das Potenzial des Erdreiches als Wärmequelle, Wärmesenke und Wärmespeicher, dem insbesondere im Sommer und in der Übergangszeit bei warmem Wetter Wärme zugeführt und im Winter und in der Übergangszeit bei kaltem Wetter Wärme entnommen werden kann. Hierfür können die obersten Schichten des Erdreiches bis zu einer Tiefe von ca. 3 bis 4 m unter einer auch nachträglich noch weiter nutzbaren Agrarfläche mit Erdkollektoren thermisch erschlossen und mit einem KNW -Leitungsnetz mit einem oder mehreren Gebäuden verbunden werden. Mit der gewonnenen und verteilten Quellenenergie auf einem Temperaturniveau von in der Regel +12°C bis -9 °C, in Sonderfällen jedoch auch bis +30°C und -20°C können Wärmepumpen/Kältemaschinen in den einzelnen Gebäuden versorgt werden, die über das ganze Jahr hinweg die Trinkwarmwasserbereitung und im Winter die Beheizung der Gebäude realisieren. Darüber hinaus ermöglicht das Verfahren eine Kühlung der Gebäude im Sommer bzw. die Bereitstellung von Kühlenergie für andere Prozesse über das ganze Jahr.

Gemäß einer Ausführungsart der Erfindung sind die Erdkollektoren nur in zwei Wärmespeicherschichten übereinander angeordnet. Hierdurch kann der Aufwand für die Erdbauarbeiten begrenzt und ein Eindringen in die Grundwasserschicht vermieden werden. Einbezogen in die Erfindung sind aber auch Ausführungsarten, bei denen die Erdkollektoren in mehr als zwei Wärmespeicherschichten übereinander angeordnet sind. Hierbei kann die Regeneration in einer oder mehreren übereinander angeordneten ersten Wärmespeicherschichten mithilfe von durch die Oberfläche dem Erdreich zugeführter Wärme und darunter in einer oder mehreren übereinander angeordneten zweiten Wärmespeicherschichten mithilfe von Wärmeabgabe von den zweiten Erdkollektoren erfolgen. Ferner umfasst die Erfindung Ausführungsarten, bei denen mit zunehmender Tiefe von Wärmespeicherschicht zu Wärmespeicherschicht die Regeneration verstärkt mithilfe von Wärmeabgabe von den Erdkollektoren in der jeweiligen Wärmespeicherschicht erfolgt.

Die oberste Wärmespeicherschicht beginnt an der Erdoberfläche und endet auf der Hälfte des Abstandes der Erdkollektoren in der obersten Wärmespeicherschicht von den Erdkollektoren in der darunter angeordneten Wärmespeicherschicht. Die unterste Wärmespeicherschicht beginnt auf der Hälfte des Abstands der Erdkollektoren in der untersten Wärmespeicherschicht von den Erdkollektoren in der darüber angeordneten Wärmespeicherschicht und ist nach unten nicht begrenzt. Falls zwischen der obersten und der untersten Wärmespeicherschicht eine oder mehrere weitere Wärmespeicherschichten vorhanden sind, beginnen diese jeweils auf der Hälfte des Abstands zwischen den Erdkollektoren in der weiteren Wärmespeicherschicht und den Erdkollektoren in der darüber angeordneten Wärmespeicherschicht und enden jeweils auf der Hälfte des Abstands der Erdkollektoren in der weiteren Wärmespeicherschicht von den Erdkollektoren in der darunter angeordneten Wärmespeicherschicht.

Gemäß einer weiteren Ausführungsart wird während der gesamten Dauer der Regeneration das Erdreich in der ersten Wärmespeicherschicht mithilfe von über zumindest einen Bereich der Oberfläche des Erdreiches flächig verteilt in das Erdreich eingebrachter Wärme und in der zweiten Wärmespeicherschicht mithilfe von Wärmeabgabe von den zweiten Erdkollektoren regeneriert, wobei die ersten Erdkollektoren keine oder weniger Wärme als die zweiten Erdkollektoren abgeben. Alternativ wird während der Regeneration zeitweilig von den ersten Erdkollektoren gleich viel Wärme oder mehr Wärme als von den zweiten Erdkollektoren abgegeben, z.B. wenn die natürliche Regeneration nur gering ist und viel Abwärme für die Regeneration zur Verfügung steht. Eine zweite Begründung hierfür kann in der Verstärkung des Effektes liegen, die Temperaturen in den unteren Wärmespeicherschichten so lange wie möglich niedrig zu halten um die Kühlung von Gebäuden im Sommer zu optimieren.

Für die Beheizung von Gebäuden wird dem Erdreich Wärme zumindest zeitweilig durch die Erdkollektoren in sämtlichen Wärmespeicherschichten entzogen. Hierdurch kann der Wärmespeicher gleichmäßig entleert und Wärmeverluste vermieden werden. Gemäß einer anderen Ausführungsart wird für die Beheizung von Gebäuden dem Erdreich zumindest zeitweilig nur durch die Erdkollektoren in der wärmsten Wärmespeicherschicht Wärme entzogen. Hierdurch kann eine ungleichmäßige Wärmeverteilung im Wärmespeicher abgebaut und eine optimale Ausnutzung der gespeicherten Wärme erreicht werden.

Gemäß einer weiteren Ausführungsart wird während des Sommers die Abwärme aus der Kühlung des Gebäudes über die zweiten Erdkollektoren an die zweite Wärmespeicherschicht abgegeben und/oder während des Winters über die Erdkollektoren in sämtlichen Wärmespeicherschichten Wärme dem Erdreich entzogen und/oder in der Übergangszeit nur durch die Erdkollektoren in der wärmeren Wärmespeicherschicht Wärme dem Erdreich entzogen oder über die Erdkollektoren in der kälteren Wärmespeicherschicht Wärme dem Erdreich zugeführt. Hierdurch wird die Entnahme von Wärme für die Beheizung und Trinkwarmwasserversorgung und die Zufuhr von Wärme für die Kühlung von Gebäuden optimiert.

Gemäß einer weiteren Ausführungsart erfolgt die Regeneration der ersten Wärmespeicherschicht mithilfe von Sonneneinstrahlung, Niederschlag, Wärmeübergang aus der Umgebungsluft oder anderen natürlichen Prozessen. Durch die natürlichen Prozesse wird Wärme zumindest über einen Bereich der Oberfläche des Erdreiches flächig verteilt dem Erdreich zugeführt. Hierdurch können sehr große Wärmemengen für die Regeneration genutzt werden.

Gemäß einer weiteren Ausführungsart, die eine Regeneration durch natürliche Prozesse begünstigt, sind die Erdkollektoren unter einer Agrarfläche verlegt. Die mit den Erdkollektoren versehenen Flächen sind aus technischer Sicht weiterhin uneingeschränkt als landwirtschaftliche Flächen nutzbar.

Gemäß einer weiteren Ausführungsart, die eine Regeneration durch natürliche Prozesse begünstigt, sind die Erdkollektoren unter Grünflächen wie Parks, Streuobstwiesen, Fußballfeldern oder anderen unversiegelten oder teilversiegelten Flächen verlegt. Hierdurch können weitere Flächen für die oberflächennahe Geothermie genutzt werden, die häufig auch im innerstädtischen urbanen Raum zur Verfügung stehen.

Gemäß einer anderen Ausführungsart erfolgt die Regeneration der ersten Wärmespeicherschicht mithilfe von Wärmeübertragung von einem oder mehreren Gebäuden, Straßen, Parkplätzen oder anderen Bauwerken. Die Wärme kann von den Bauwerken über die Oberfläche des Erdreiches auf das Erdreich übertragen werden. Insbesondere kann hierfür die Abwärme von beheizten Gebäuden genutzt werden. Ferner kann vorteilhaft die von Straßen, Parkplätzen oder anderen großflächigen Bauwerken an das Erdreich abgegebene Wärme für die Regeneration genutzt werden, da die Sonneneinstrahlung diese Bauwerke stark erhitzt und sie eine hohe Wärmespeicherfähigkeit aufweisen.

Gemäß einer weiteren Ausführung wird die Abwärme aus der Gebäudekühlung für die Regeneration der zweiten Wärmespeicherschicht verwendet. Hierdurch können zusätzlich in den Sommermonaten die Gebäude gekühlt und angenehmere Wohntemperaturen erreicht werden.

Gemäß einer weiteren Ausführungsart wird Wärme aus einem oder mehreren der nachfolgenden Systeme für die Regeneration der zweiten Wärmespeicherschicht verwendet: Solarthermie, Luftabsorber, Blockheizkraftwerk, Prozessabwärme, Luft-Wasser-Wärmepumpe, Rückkühlwerke, fossile oder regenerative Wärmeerzeuger. Dabei ist auch eine Kombination eines oder mehrerer dieser Systeme mit der Verwendung von Abwärme aus der Gebäudekühlung möglich.

Gemäß einer weiteren Ausführungsart wird zusätzlich Wärme für die Regeneration der zweiten Wärmespeicherschicht durch das Grundwasser zugeführt.

Gemäß einer weiteren Ausführungsart werden die Erdkollektoren in der zweiten Wärmespeicherschicht im Grundwasser verlegt. Hierdurch wird das Grundwasser in besonders starkem Maße als Wärmequelle für die Regeneration und/oder Speicherung genutzt.

Gemäß einer weiteren Ausführungsart durchströmt bei der Abgabe von Wärme das Wärmeträgermedium die Erdkollektoren in der zweiten Wärmespeicherschicht in der Fließrichtung des Grundwassers am Ort dieser Erdkollektoren. Hierdurch wird der Abtransport von Wärme über das Grundwasser aus der zweiten Wärmespeicherschicht gering gehalten.

Gemäß einer weiteren Ausführungsart wird der ersten Wärmespeicherschicht von den ersten Erdkollektoren Wärme entzogen und diese Wärme zur Regeneration der zweiten Wärmespeicherschicht von den zweiten Erdkollektoren abgegeben. Hierdurch kann ein großer Wärmeeintrag durch natürliche Prozesse oder Bauwerke in die erste Wärmespeicherschicht auf die zweite Wärmespeicherschicht übertragen und die Nutzung der natürlichen Prozesse oder Wärmeabgabe von Bauwerken zusätzlich erhöht werden.

Gemäß einer weiteren Ausführungsart erfolgt die Regeneration der ersten Wärmespeicherschicht und/oder der zweiten Wärmespeicherschicht mithilfe von gesammeltem Regenwasser und/oder abgepumptem Grundwasser, das der jeweiligen Wärmespeicherschicht gezielt zugeführt wird. Die Zufuhr des Regenwassers und/oder Grundwassers kann beispielsweise über Rigole-Leitungen erfolgen, die oberhalb der jeweiligen Wärmespeicherschicht im Erdreich verlegt sind.

Gemäß einer weiteren Ausführungsart umfassen die Wärmespeicherschichten jeweils eine Vielzahl Erdkollektormodule. Hierdurch wird der Einbau von Erdkollektoren in das Erdreich erleichtert.

Gemäß einer weiteren Ausführungsart umfassen die Wärmespeicherschichten jeweils eine Vielzahl von in Strängen im Erdreich verlegten Rohren oder Rohrschlangen.

Gemäß einer weiteren Ausführungsart werden die Leitungen eines KNW-Netzes als Erdkollektoren genutzt.

Gemäß einer weiteren Ausführungsart ist unterhalb der untersten Wärmespeicherschicht eine wasserdämmende (d.h. den Wasserdurchgang reduzierende) oder eine wasserundurchlässige Schicht angeordnet. Hierfür kann beispielsweise eine Kunststofffolie und/oder eine Lehmschicht verwendet werden. Vorzugsweise ist die wasserdämmende oder wasserundurchlässige Schicht unmittelbar unterhalb der untersten Wärmespeicherschicht angeordnet. Weiterhin vorzugsweise ist die wasserdämmende oder wasserundurchlässige Schicht auf der Sohle der Grube verlegt, in der die Erdkollektoren verlegt werden. Durch die wasserdämmende oder wasserundurchlässige Schicht wird das Abfließen von Wasser beschränkt oder verhindert, um eine möglichst hohe Bodenfeuchte zu erreichen, die für die Speicherung von Wärme genutzt werden kann.

Gemäß einer weiteren Ausführungsart wird in mindestens eine Wärmespeicherschicht Kies und ein anderes Material mit größerer Wärmespeicherfähigkeit als das originär am Ort der Verlegung der Erdkollektoren vorhandene Erdreich in den Boden eingebaut. Die jeweilige Wärmespeicherschicht kann teilweise oder vollständig aus dem Material mit größerer Wärmespeicherfähigkeit bestehen. Kies hat eine besonders hohe Wärmespeicherfähigkeit. Zudem verfügt eine Kiesschüttung über sehr viele Freiräume, in denen sich Wasser sammeln kann, welches aufgrund seines Vereisungspotenzials eine besonders hohe Wärmespeicherfähigkeit aufweist.

Gemäß einer weiteren Ausführungsart wird das Wärmeträgermedium mittels mehrerer zentraler Förderpumpen durch die Erdkollektoren hindurchgepumpt, die entsprechend der jeweiligen Fördermenge zu- und abgeschaltet und hinsichtlich der Drehzahl gesteuert werden können. Hierdurch wird eine genaue Einstellung der Fördermengen und eine Redundanz erreicht, sodass auch bei Ausfall einzelner Förderpumpen das Verfahren noch funktionsfähig ist, gegebenenfalls unter verringerter Leistung.

Bei Einsatz einer oder mehrerer zentraler Pumpen in einem KNW spricht man von einem aktiven KNW, da die Wärmepumpen keine eigenen Pumpen aufweisen. Bei einer alternativen Ausführungsart werden die eigenen Pumpen der Wärmepumpen genutzt, um das Wärmeträgermedium durch die Erdkollektoren hindurchzupumpen. In diesem Fall spricht man von einem passiven KNW,

Gemäß einer weiteren Ausführungsart sind die Leitungen von den Erdkollektoren in den mehreren Wärmespeicherschichten hydraulisch getrennt zu einer Pumpenzentrale geführt und die Erdkollektoren in sämtlichen Wärmespeicherschichten zur Gebäudeheizung und/oder Trinkwarmwasserversorgung in der Pumpenzentrale mit einer Wärmepumpe verbunden, welche die von den Erdkollektoren zugeführte Wärme auf ein höheres Temperaturniveau anhebt und an ein Wärmeübertragungssystem und/oder eine Trinkwarmwasserversorgung im Gebäude abgibt und/oder zum Einspeisen von Regenerationswärme zumindest in die zweite Wärmespeicherschicht die zweiten Erdkollektoren direkt oder über einen Wärmeaustauscher mit dem Wärmeübergangssystem des Gebäudes oder mit einer anderen Wärmequelle verbunden werden. Hierdurch können die jeweils für die Entnahme und die Abgabe von Wärme eingesetzten Erdkollektoren in den verschiedenen Wärmespeicherschichten gezielt zu- und abgeschaltet werden.

Gemäß einer weiteren Ausführungsart sind mehrere Gebäude über ein Verteilnetz mit den Erdkollektoren verbunden. Hierdurch wird eine KNW-Anlage verwirklicht.

Gemäß einer weiteren Ausführungsart wird der Druck in den Erdkollektoren und/oder im Verteiler überwacht und bei einem Druckabfall die betreffenden Teile des hydraulischen Systems abgeschaltet. Hierdurch wird die Sicherheit des Systems erhöht.

Gemäß einer weiteren Ausführungsart wird die Temperatur im Verteilnetz und/oder in den Erdkollektoren und/oder im Erdreich überwacht. Hierdurch kann die Betriebsweise der Anlage optimiert und Störungen aufgedeckt werden.

Die Erfindung wird nachfolgend anhand der anliegenden Zeichnungen eines Ausführungsbeispiels näher erläutert. In den Zeichnungen zeigen:
- Fig. 1: Anlage zur Nutzung der oberflächennahen Geothermie in einer schematischen Ansicht;
- Fig. 2: dieselbe Anlage bei Normalbetrieb mit Wärmeentnahme aus sämtlichen Wärmespeicherschichten in schematischer Ansicht;
- Fig. 3: dieselbe Anlage bei Normalbetrieb mit Wärmeentnahme nur aus der oberen Wärmespeicherschicht in schematischer Ansicht;
- Fig. 4: dieselbe Anlage bei Normalbetrieb mit Wärmeentnahme nur aus der unteren Wärmespeicherschicht in schematischer Ansicht;
- Fig. 5: dieselbe Anlage bei reinem Netzbetrieb ohne Wärmeentnahme durch Erdkollektoren in schematischer Ansicht;
- Fig. 6: dieselbe Anlage bei Regeneration der unteren Wärmespeicherschicht durch Wärme aus der oberen Wärmespeicherschicht in schematischer Ansicht;
- Fig. 7: dieselbe Anlage bei reinem Netzbetrieb und gleichzeitiger Regeneration der unteren Wärmespeicherschicht durch Entnahme von Wärme aus der oberen Wärmespeicherschicht in schematischer Ansicht;
- Fig. 8: dieselbe Anlage mit Nacherwärmung des kalten Nahwärmenetzes durch eine externe Quelle in schematischer Ansicht;
- Fig. 9: dieselbe Anlage bei Normalbetrieb und Regeneration der oberen Wärmespeicherschicht durch eine externe Quelle in schematischer Ansicht;
- Fig. 10: dieselbe Anlage bei Normalbetrieb und Regeneration der unteren Wärmespeicherschicht durch eine externe Quelle in schematischer Ansicht.
- Fig. 11a-d: Temperaturfeld in einem Vertikalschnitt durch einen Strang aus Erdkollektoren in zwei übereinander angeordneten Wärmespeicherschichten in verschiedenen Monaten eines Jahres.

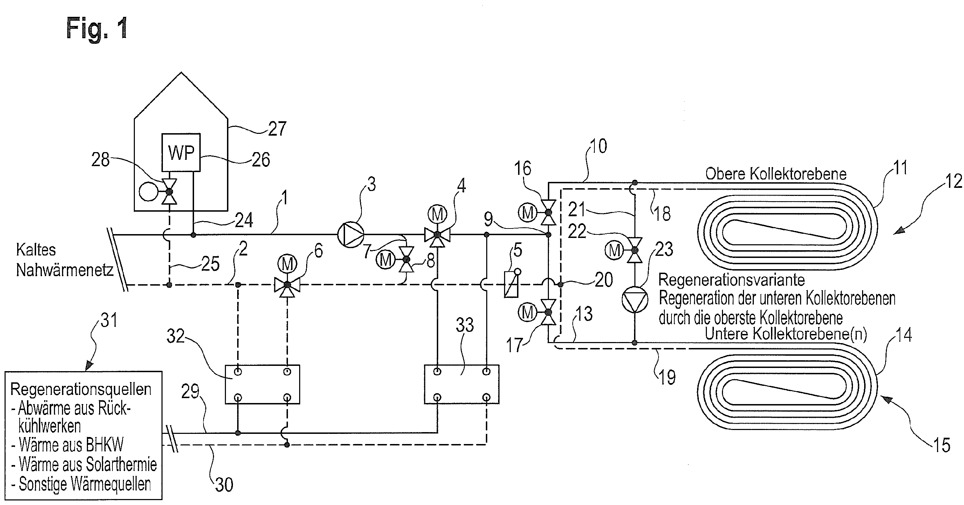

Gemäß Fig. 1 umfasst die Anlage eine erste Vorlaufleitung 1 und eine erste Rücklaufleitung 2 eines kalten Nahwärmenetzes. In die erste Vorlaufleitung 1 ist eine erste Umwälzpumpe 3 und in Strömungsrichtung dahinter ein als Dreiwegeventil ausgebildetes erstes Motorventil 4 integriert. In der ersten Rücklaufleitung 2 ist eine Rückschlagklappe 5 und in Strömungsrichtung dahinter ein als Dreiwegeventil ausgebildetes zweites Motorventil 6 angeordnet.

Zwischen erster Umwälzpumpe 3 und erstem Motorventil 4 ist die erste Vorlaufleitung 1 über eine erste Verbindungsleitung 7 mit darin angeordnetem dritten Motorventil 8 mit der ersten Rücklaufleitung 2 zwischen Rückschlagklappe 5 und zweitem Motorventil 6 verbunden.

Die erste Vorlaufleitung 1 ist über eine erste Verzweigung 9 mit einer zweiten Vorlaufleitung 10 zu ersten Erdkollektoren 11 in einer ersten Wärmespeicherschicht 12 und mit einer dritten Vorlaufleitung 13 zu zweiten Erdkollektoren 14 in einer zweiten Wärmespeicherschicht 15 verbunden.

Neben der ersten Verzweigung 9 ist in der zweiten Vorlaufleitung 10 ein viertes Motorventil 16 und in der dritten Vorlaufleitung 13 ein fünftes Motorventil 17 angeordnet.

Die ersten Erdkollektoren 11 sind über zweite Rücklaufleitungen 18 und die zweiten Erdkollektoren 14 über dritte Rücklaufleitungen 19 mit einer zweiten Verzweigung 20 zur ersten Rücklaufleitung 2 verbunden.

Die erste Wärmespeicherschicht 12 ist oberhalb der zweiten Wärmespeicherschicht 15 angeordnet. In jeder Wärmespeicherschicht 12, 15 sind eine Vielzahl Erdkollektoren 11, 14 jeweils etwa auf demselben Höhenniveau angeordnet. Vorzugsweise sind die Erdkollektoren jeweils horizontal ausgerichtet. In jeder Wärmespeicherschicht 12, 15 sind die Erdkollektoren 11, 14 über die jeweiligen Vorlaufleitungen 10, 13 und Rücklaufleitungen 18, 19 miteinander verbunden. Zur Vereinfachung ist im Anlagenschema in jeder Wärmespeicherschicht 12, 15 nur ein einziger Erdkollektor 11, 14 gezeigt.

Die zweite Vorlaufleitung 10 und die dritte Vorlaufleitung 13 sind über eine zweite Verbindungsleitung 21 miteinander verbunden, wobei in der zweiten Verbindungsleitung 21 ein sechstes Motorventil 22 und eine zweite Umwälzpumpe 23 angeordnet sind.

An die erste Vorlaufleitung 1 und die erste Rücklaufleitung 2 sind über vierte Vorlaufleitungen 24 und vierte Rücklaufleitungen 25 Wärmepumpen 26 in einer Vielzahl von Gebäuden 27 angeschlossen. In die vierten Rücklaufleitungen sind Regelventile 28 integriert, die den Volumenstrom regeln. Im Anlagenschema ist zur Vereinfachung nur ein einziges Gebäude 27 gezeigt.

Eine fünfte Vorlaufleitung 29 und eine fünfte Rücklaufleitung 30 zu einer Regenerationsquelle 31 (z.B. Abwärme aus einem Rückkühlwerk, Wärme aus einem Blockheizkraftwerk, Wärme aus Solarthermie oder sonstiger Wärmequelle) sind mit den Eingangsseiten eines ersten Wärmetauschers 32 und eines zweiten Wärmetauschers 33 verbunden. Die Ausgangsseite des ersten Wärmetauschers 32 ist über das als Dreiwegeventil ausgebildete, zweite Motorventil 6 mit der ersten Rücklaufleitung 2 verbunden. Zusätzlich ist sie zwischen dem zweiten Motorventil 6 und den Abzweigungen zu den vierten Rücklaufleitungen 25 mit der ersten Rücklaufleitung 2 verbunden.

Die Ausgangsseite des zweiten Wärmetauschers 33 ist über das als Dreiwegeventil ausgebildete, erste Motorventil 4 zwischen der ersten Umwälzpumpe 3 und der ersten Verzweigung 9 mit der ersten Vorlaufleitung 1 verbunden. Zusätzlich ist sie zwischen dem ersten Motorventil 4 und dem ersten Verzweigungspunkt 9 direkt mit der ersten Vorlaufleitung 1 verbunden.

Die Rücklaufleitungen 2, 18, 19, 25, 30 sowie die Verbindung der ersten Rücklaufleitung 2 mit der Ausgangsseite des ersten Wärmetauschers 32 sind mit Strichlinien dargestellt, die übrigen Leitungen mit Volllinien.

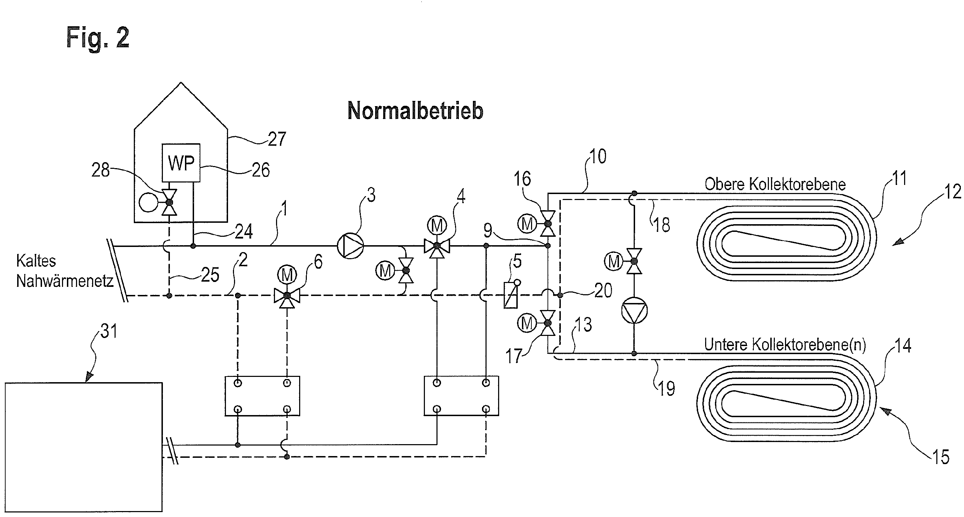

Gemäß Fig. 2 sind im Normalbetrieb die erste Umwälzpumpe 3 eingeschaltet und das erste, zweite, vierte und fünfte Motorventil 4, 6, 16, 17 auf Durchgang geschaltet, sodass die erste Umwälzpumpe 3 den Wärmeträger (z.B. ein Gemisch aus Wasser und Frostschutzmittel) aus der ersten Vorlaufleitung 1 durch die zweiten und dritten Vorlaufleitungen 10, 13 und die Erdkollektoren 11, 14 hindurchpumpt. In den Erdkollektoren 11, 14 nimmt der Wärmeträger Wärme aus dem Erdreich in den ersten und zweiten Wärmespeicherschichten 12, 15 auf bzw. gibt diese im Kühlbetrieb (d.h. bei Kühlung der Gebäude 27 durch Wärmeentzug) an das Erdreich ab. Durch die zweite und dritte Rücklaufleitung 18, 19 gelangt er in die erste Rücklaufleitung 2. Nach Durchgang durch die Rückschlagklappe 5, das zweite Motorventil 6 und die vierten Rücklaufleitungen 25 hindurch gelangt der Wärmeträger in die Gebäude 27. Dort wird Wärme vom Wärmeträger mittels der Wärmepumpen 26 auf ein höheres Niveau gebracht und zur Beheizung und/oder Trinkwassererwärmung benutzt. Im Kühlbetrieb wird die Wärme aus dem Gebäude an das Netz abgegeben. Aus den Wärmepumpen 26 gelangt der abgekühlte Wärmeträger durch die vierten Vorlaufleitungen 24 zurück in die erste Vorlaufleitung 1.

Diese Betriebsweise kann beispielsweise gewählt werden, wenn die Gebäude 27 einen hohen Wärmebedarf haben und in der ersten Wärmespeicherschicht 12 und der zweiten Wärmespeicherschicht 15 hinreichend Wärme gespeichert ist.

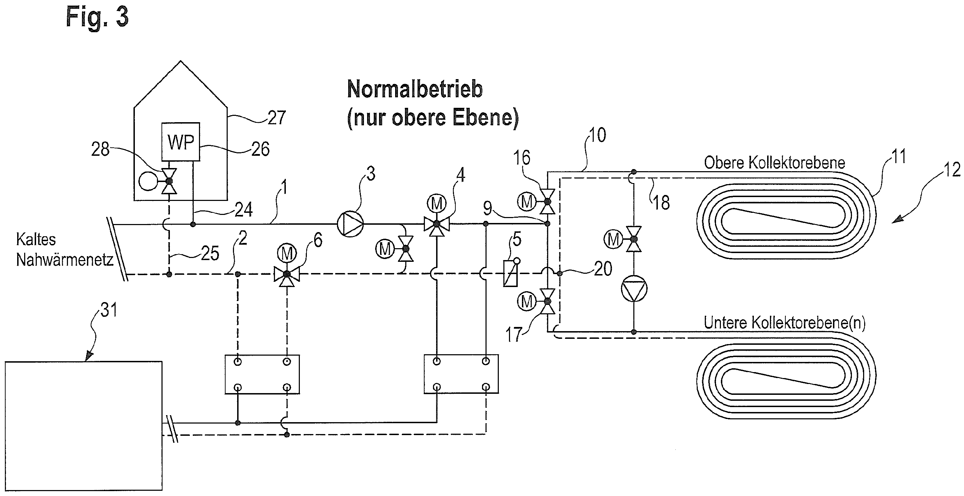

Die Betriebsweise von Fig. 3 unterscheidet sich von der Vorbeschriebenen dadurch, dass der Wärmeträger nur durch die ersten Erdkollektoren 11 in der ersten Wärmespeicherschicht 12 hindurchgepumpt wird. Hierfür ist das fünfte Motorventil 17 geschlossen.

Diese Betriebsweise kann beispielsweise gewählt werden, wenn die Gebäude 27 einen mittleren Wärmebedarf haben und infolge natürlicher Regeneration die erste Wärmespeicherschicht 12 besonders viel Wärme bereitstellt.

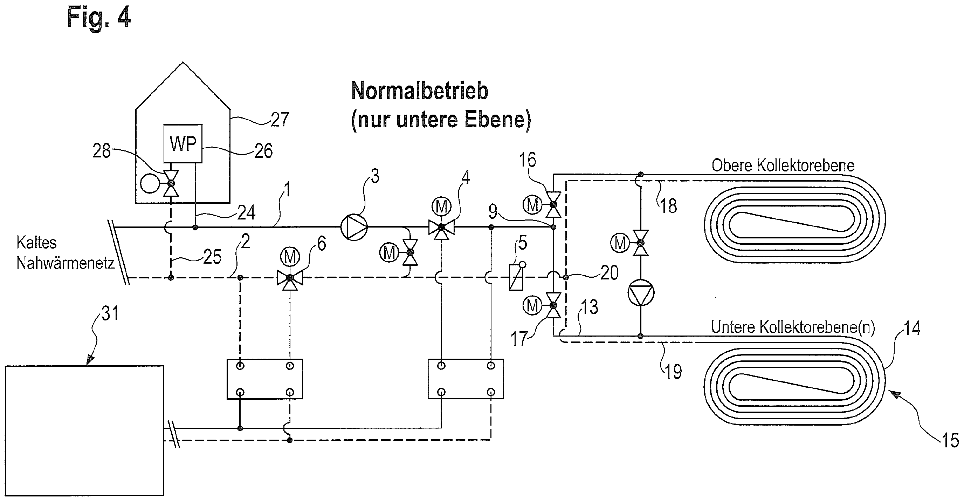

Gemäß Fig. 4 wird Wärme nur mittels der zweiten Erdkollektoren 14 der zweiten Wärmespeicherschicht 15 entnommen. Hierfür ist das vierte Motorventil 16 geschlossen und das fünfte Motorventil 17 geöffnet.

Diese Betriebsweise kann beispielsweise gewählt werden, wenn die Gebäude 27 nur einen mittleren Wärmebedarf haben, die erste Wärmespeicherschicht 12 regeneriert werden muss und in der zweiten Wärmespeicherschicht 15 eine hinreichende Wärmemenge gespeichert ist. Diese Betriebsweise kann auch dazu dienen, die zweite Wärmespeicherschicht 15 für eine verbesserte Wärmeabgabe bei späterer Naturkühlung der Gebäude 27 herunterzukühlen.

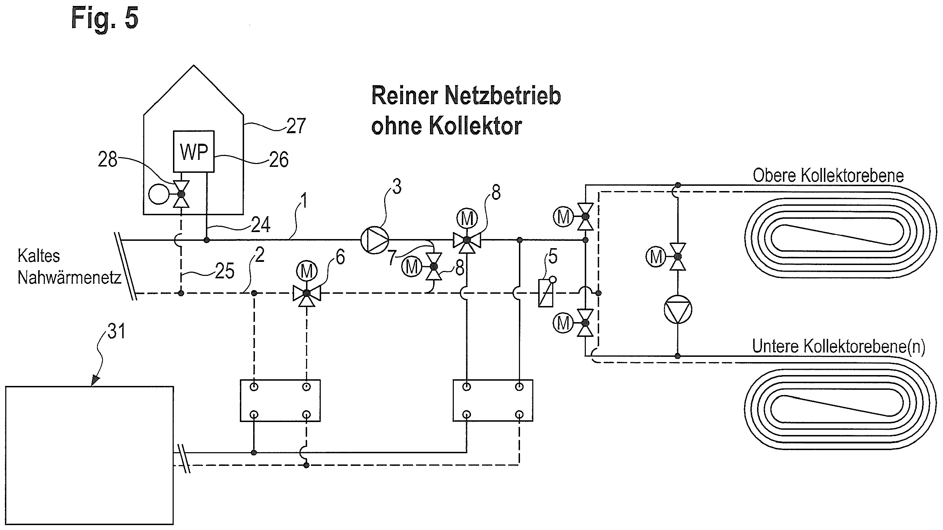

Gemäß Fig. 5 wird der Wärmeträger nur durch die erste Vorlaufleitung 1 und die erste Rücklaufleitung 2 hindurch im Kreis gepumpt. Hierfür sind die beiden Motorventile 16, 17 geschlossen und das Motorventil 6 auf Durchgang und 8 geöffnet.

Diese Betriebsweise kann beispielsweise gewählt werden, wenn die Gebäude 27 einen nur geringen Wärmebedarf haben, der durch Entnahme von Wärme aus dem Erdreich mittels der darin verlegten ersten Vorlauf- und Rücklaufleitungen 1, 2 gedeckt werden kann.

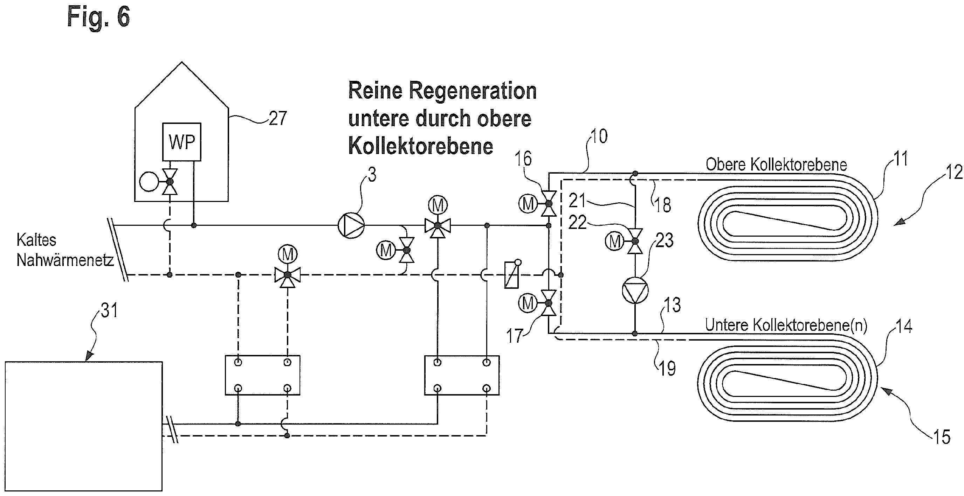

Gemäß Fig. 6 wird Wärme mittels der ersten Erdkollektoren 11 der ersten Wärmespeicherschicht 12 entzogen und mittels der zweiten Erdkollektoren 14 in der zweiten Wärmespeicherschicht 15 abgegeben. Hierfür ist das sechste Motorventil 22 geöffnet und die zweite Umwälzpumpe 23 eingeschaltet und sind die vierten und fünften Motorventile 16, 17 geschlossen. Die erste Umwälzpumpe 3 ist ausgeschaltet. Diese Betriebsweise kann beispielsweise gewählt werden, wenn durch natürliche Regeneration hinreichend Wärme in der ersten Wärmespeicherschicht 12 für die Regeneration der zweiten Wärmespeicherschicht 15 zur Verfügung steht und die Gebäude 27 keinen Wärmebedarf haben.

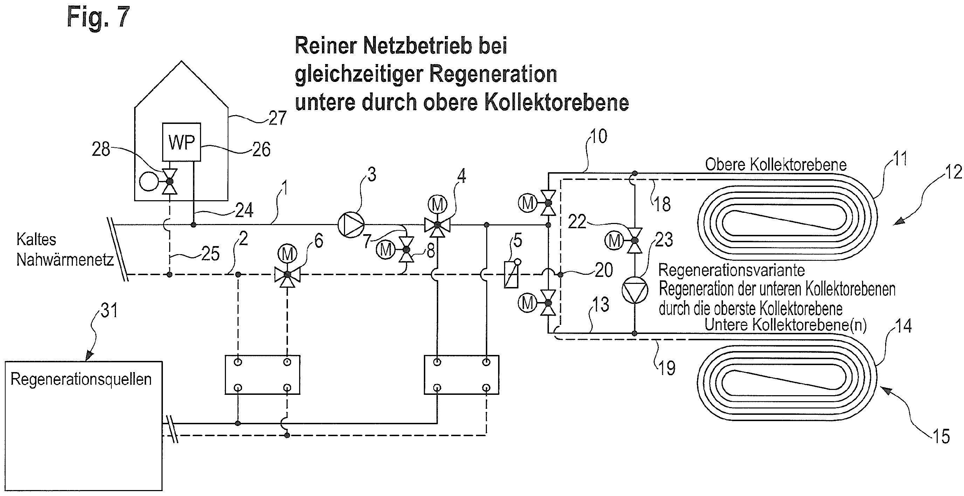

Bei der Betriebsweise gemäß Fig. 7 werden die Betriebsweisen von Fig. 5 und 6 miteinander kombiniert.

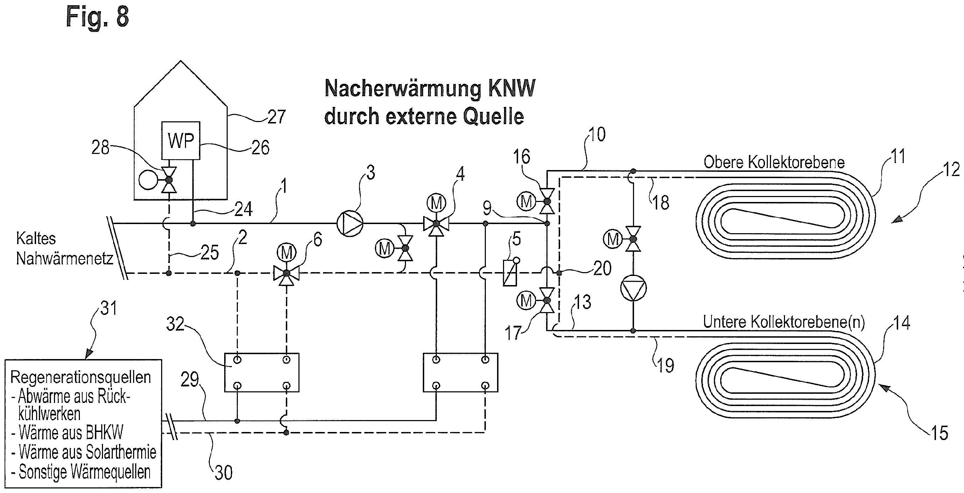

Die Betriebsweise von Fig. 8 entspricht grundsätzlich der Betriebsweise von Fig. 2, bei der sowohl der ersten Wärmespeicherschicht 12 als auch der zweiten Wärmespeicherschicht 15 Wärme entnommen wird. Nach dem Durchlaufen der Erdkollektoren 11, 14 wird der Wärmeträger zusätzlich im ersten Wärmetauscher 32 mit Wärme aus einer externen Wärmequelle 31 aufgewärmt. Hierfür ist das zweite Motorventil 6 so geschaltet, dass der Wärmeträger aus der ersten Rücklaufleitung 2 zur Ausgangsseite des ersten Wärmetauschers 32 geführt und von dieser zurück zur ersten Rücklaufleitung 2 geführt wird. Diese Betriebsweise kann beispielsweise gewählt werden, wenn die Gebäude 27 einen sehr hohen Wärmebedarf haben bzw. der Einsatz von Frostschutz-Gemischen nicht zulässig sondern nur Wasser im System zulässig ist und somit eine Vereisung zwingend zu verhindern ist.

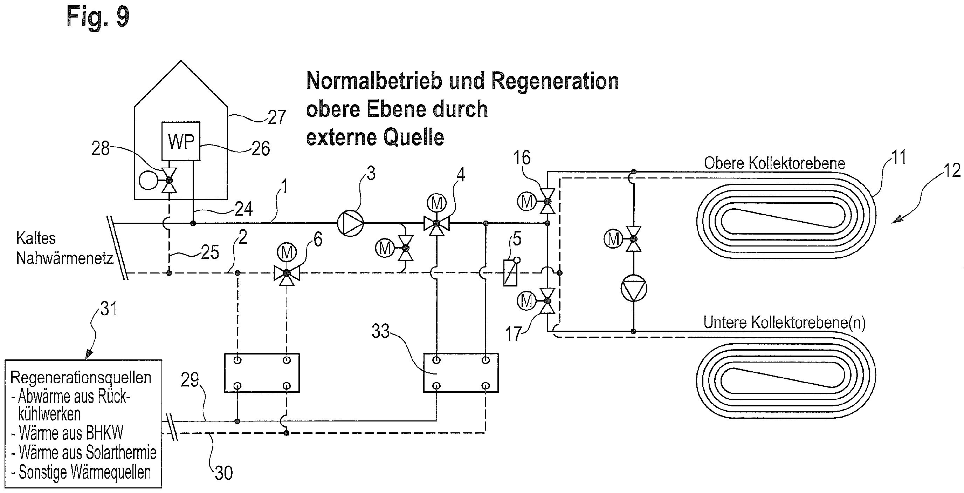

Für die Betriebsweise von Fig. 9 wird eine externe Wärmequelle 31 verwendet, um der ersten Wärmespeicherschicht 12 zusätzliche Wärme für die Regeneration zur Verfügung zu stellen. Hierfür ist das erste Motorventil 4 so geschaltet, dass der Wärmeträger aus der ersten Vorlaufleitung 1 über die Ausgangsseite des zweiten Wärmetauschers 33 und zurück zur ersten Vorlaufleitung 1 geführt wird. Das fünfte Motorventil 17 ist geschlossen, sodass der Wärmeträger nur über die ersten Erdkollektoren 11 geführt wird. Das zweite Motorventil 6 ist auf Durchgang geschaltet, sodass der Wärmeträger durch die erste Rücklaufleitung 2 zu den Gebäuden 27 gelangt. Diese Betriebsweise kann gewählt werden, wenn die Gebäude einen geringen Wärmebedarf haben und aus einer externen Wärmequelle 31 Wärme für die Regeneration zur Verfügung steht.

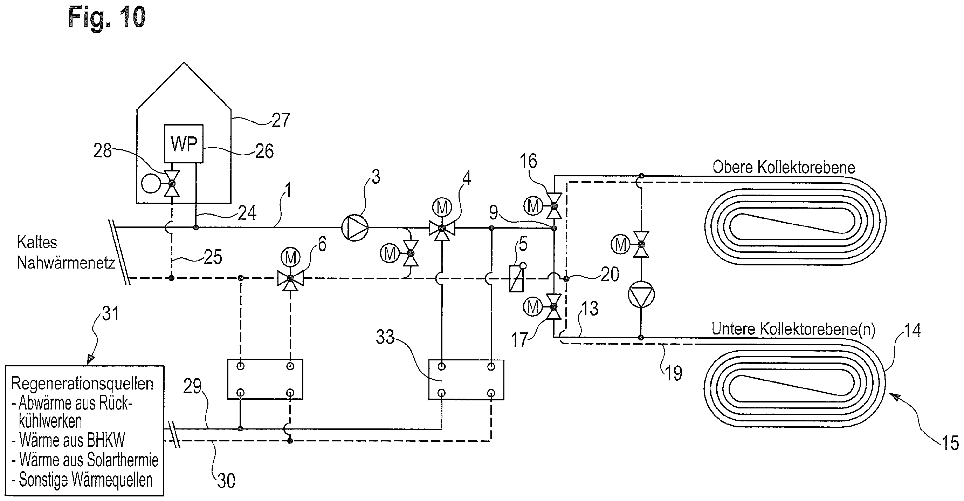

Gemäß Fig. 10 wird die Wärme der externen Wärmequelle 31 für die Regeneration der zweiten Wärmespeicherschicht 15 verwendet. Hierfür ist entsprechend das vierte Motorventil 16 geschlossen und das fünfte Motorventil 17 geöffnet. Diese Betriebsweise kann gegenüber der vorangegangenen Betriebsweise bevorzugt werden, falls genügend Wärme für die natürliche Regeneration der ersten Wärmespeicherschicht 12 zur Verfügung steht.

Die Betriebsweisen gemäß Fig. 3 bis 5 und 7, 9 und 10 können im Kühlbetrieb zur Abgabe von Wärme an das Erdreich genutzt werden.

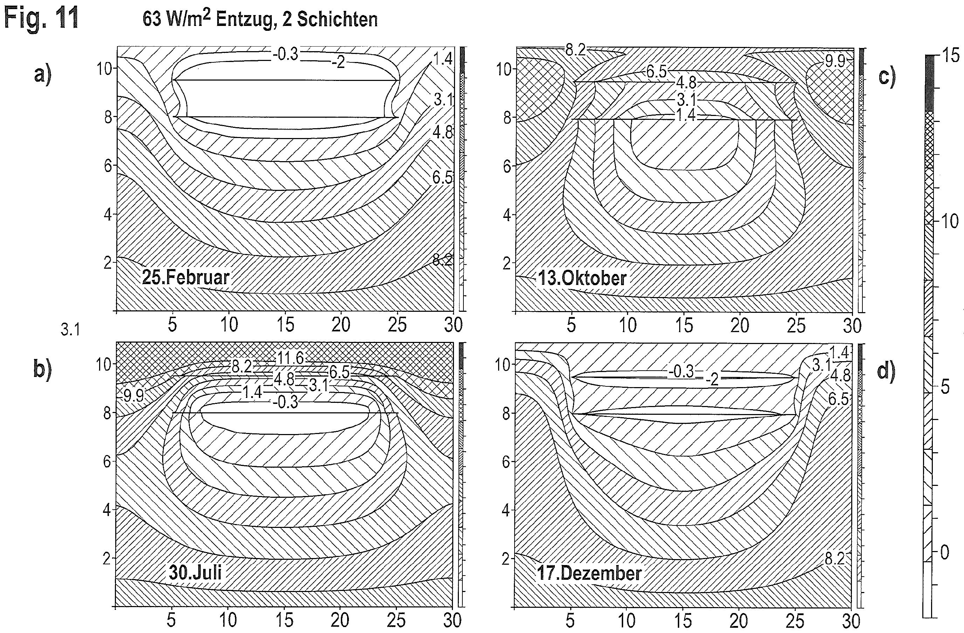

In Fig. 11 sind für ein Energiefeld mit in zwei Wärmespeicherschichten horizontal übereinander angeordneten Erdkollektoren Temperaturfelder in verschiedenen Monaten gemäß einer Computersimulation dargestellt. Die ersten Erdkollektoren sind in einem Abstand von 1,5 m unter der Erdoberfläche und die zweiten Erdkollektoren sind in einem Abstand von 1,5 m unter den ersten Erdkollektoren angeordnet. Auf der Ordinate ist jeweils die Höhenlage bis zur Erdoberfläche angegeben. Auf der Abszisse ist eine Längenkoordinate in Längsrichtung der Erdkollektoren angegeben. Jedes Bild ist somit ein Vertikalschnitt durch das Energiefeld in Längsrichtung der Erdkollektoren mit einer Tiefe von 11 m und einer Länge von 30 m. Die jeweiligen Temperaturen sind durch Grautöne in Legenden am rechten Rand der Figuren angegeben.

Gemäß Fig. 11a sind Ende des Winters am 25. Februar durch Wärmeentzug die erste (obere) und die zweite (untere) Wärmespeicherschicht vereist. Die Vereisung ermöglicht zusätzliche Energiegewinne durch die Umwandlungsenthalpie.

Im Frühjahr setzen natürliche Regenerationsprozesse ein. Infolgedessen wird die erste Wärmespeicherschicht wärmer als die zweite Wärmespeicherschicht. Somit findet ein Wärmefluss von der ersten Wärmespeicherschicht in die zweite Wärmespeicherschicht statt. Durch die natürliche Regeneration kann das Erdreich bereits Ende März wieder landwirtschaftlich genutzt werden.

Während des Sommers können die Gebäude als Wärmequelle genutzt werden. Hierfür kann mittels der Wärmeverteilungssysteme den Gebäuden Wärme entnommen und in die Erdkollektoren in der zweiten Wärmespeicherschicht eingespeist werden. Hierdurch kann die zweite Wärmespeicherschicht in einem Ausmaß regeneriert werden, die durch natürliche Regeneration nicht möglich wäre. Gegebenenfalls kann die Wärme aus den Gebäuden auch in der ersten Wärmespeicherschicht gespeichert werden. Dadurch, dass sich die Erdoberfläche erwärmt und eine höhere Temperatur als die zweite Wärmespeicherschicht aufweist, bewirkt die erste Wärmespeicherschicht eine Dämmung, die ein Abfließen der gespeicherten Wärme verhindert. In Fig. 11b ist die Regeneration der ersten Wärmespeicherschicht und der zweiten Wärmespeicherschicht für den 30. Juli veranschaulicht.

Am Ende des Sommers sind beide Wärmespeicherschichten wieder vollständig regeneriert. Jetzt kann die untere Wärmespeicherschicht als Wärmespeicher genutzt werden. Um Verluste durch Abfließen von Wärme in das Grundwasser gering zu halten, wird das Energiefeld vorzugsweise dort verlegt, wo das Grundwasser keine oder eine geringe Fließgeschwindigkeit aufweist. Die Temperaturverteilung bei vollständig regeneriertem und zusätzlich Wärme speicherndem Erdreich am 13. Oktober ist in Fig. 11c gezeigt.

Wenn im Herbst wieder von der Kühlung auf die Beheizung der Gebäude umgestellt wird, wird dem Erdreich wieder Wärme entzogen. Die im Sommer eingespeicherte Wärme kann dann wieder für die Beheizung von Gebäuden und Erwärmung von Trinkwasser genutzt werden. Die Temperaturverteilung in der ersten Hälfte der Heizperiode am 17. Dezember ist in Fig. 11d gezeigt.

## Patentansprüche

1. Verfahren zur Nutzung der oberflächennahen Geothermie für die Beheizung und/oder Kühlung und/oder Erwärmung von Trinkwarmwasser von einem oder mehreren Gebäuden (27) mit in mehreren Wärmespeicherschichten übereinander angeordneten Erdkollektoren, bei dem für die Beheizung eines oder mehrerer Gebäuden dem Erdreich durch die Erdkollektoren in mindestens einer Wärmespeicherschicht Wärme entzogen wird und die Regeneration des Erdreiches zumindest zeitweilig in zumindest einer erste Erdkollektoren (11) enthaltenden ersten Wärmespeicherschicht (12) mithilfe von über zumindest einen Bereich der Oberfläche des Erdreiches flächig verteilt dem Erdreich zugeführter Wärme und zugleich in zumindest einer unterhalb der ersten Wärmespeicherschicht (12) angeordneten, zweite Erdkollektoren (14) enthaltenden zweiten Wärmespeicherschicht (15) mithilfe von Wärmeabgabe von den zweiten Erdkollektoren (14) an die zweite Wärmespeicherschicht (15) erfolgt, wobei die ersten Erdkollektoren (11) an die erste Wärmespeicherschicht (12) keine oder weniger Wärme als die zweiten Erdkollektoren (14) an die zweite Wärmespeicherschicht (15) abgeben und für die Beheizung von Gebäuden dem Erdreich Wärme zumindest zeitweilig durch die Erdkollektoren in sämtlichen Wärmespeicherschichten (12, 15) entzogen wird.

2. Verfahren nach Anspruch 1, bei dem die Erdkollektoren mindestens eine der nachfolgenden Ausführungsarten umfassen: Rohre, Rohrschlangen, Boden-Klima-Tauscher oder Spiralkollektoren oder andere Erdkollektormodule, die an Trägern gehaltene Rohrschlangen umfassen, Kapillarrohrmatten.

3. Verfahren nach Anspruch 1 oder 2, bei dem die Erdkollektoren in mehr als zwei Wärmespeicherschichten übereinander angeordnet sind.

4. Verfahren nach einem der Ansprüche 1 bis 3, bei dem während der gesamten Dauer der Regeneration das Erdreich in der ersten Wärmespeicherschicht (12) mithilfe von über zumindest einen Bereich der Oberfläche des Erdreiches flächig verteilt dem Erdreich zugeführter Wärme und in der zweiten Wärmespeicherschicht (15) mithilfe von Wärmeabgabe von den zweiten Erdkollektoren (14) regeneriert wird, wobei die ersten Erdkollektoren (11) keine oder weniger Wärme an die erste Wärmespeicherschicht (12) als die zweiten Erdkollektoren (14) an die zweite Wärmespeicherschicht (15) abgeben.

5. Verfahren nach einem der Ansprüche 1 bis 4, bei dem für die Beheizung von Gebäuden (27) dem Erdreich zumindest zeitweilig nur durch die Erdkollektoren (11, 14) in der wärmsten Wärmespeicherschicht Wärme entzogen wird.

6. Verfahren nach einem der Ansprüche 1 bis 5, bei dem während des Sommers die Abwärme aus der Kühlung des Gebäudes über die zweiten Erdkollektoren (14) an die zweite Wärmespeicherschicht (15) abgegeben wird, und/oder während des Winters über die Erdkollektoren sämtlichen Wärmespeicherschichten Wärme entzogen wird und/oder in der Übergangszeit nur durch die Erdkollektoren in der wärmeren Wärmespeicherschicht Wärme dem Erdreich entzogen oder über die Erdkollektoren in der kälteren Wärmespeicherschicht Wärme dem Erdreich zugeführt wird.

7. Verfahren nach einem der Ansprüche 1 bis 6, bei dem die Regeneration der ersten Wärmespeicherschicht mit Hilfe von Sonneneinstrahlung, Niederschlag, Wärmeübergang aus der Umgebungsluft oder anderen natürlichen Prozessen erfolgt.

8. Verfahren nach einem der Ansprüche 1 bis 7, bei dem die Erdkollektoren unter einer Agrarfläche verlegt sind.

9. Verfahren nach einem der Ansprüche 1 bis 8, bei dem die Erdkollektoren unter Grünflächen wie Parks, Streuobstwiesen, Regenrückhaltebecken, Fußballfeldern oder anderen unversiegelten oder teilversiegelten Flächen verlegt sind.

10. Verfahren nach einem der Ansprüche 1 bis 9, bei dem die Regeneration der ersten Wärmespeicherschicht (12) mit Hilfe von Wärmeübertragung von einem oder mehreren Gebäuden, Straßen, Parkplätzen oder anderen Bauwerken erfolgt.

11. Verfahren nach einem der Ansprüche 1 bis 10, bei dem die Abwärme aus der Gebäudekühlung für die Regeneration der zweiten Wärmespeicherschicht (15) verwendet wird.

12. Verfahren nach einem der Ansprüche 1 bis 11, bei dem Wärme aus zumindest einem der nachfolgenden Systeme für die Regeneration der zweiten Wärmespeicherschicht (15) verwendet wird: Solarthermie, Luftabsorber, Blockheizkraftwerk, Prozessabwärme, Luft-Wasser-Wärmepumpe, Rückkühlwerk, fossile oder regenerative Wärmeerzeuger.

13. Verfahren nach einem der Ansprüche 1 bis 12, bei dem zusätzlich Wärme für die Regeneration der zweiten Wärmespeicherschicht (15) durch das Grundwasser zugeführt wird.

14. Verfahren nach einem der Ansprüche 1 bis 13, bei dem die Erdkollektoren (14) der zweiten Wärmespeicherschicht (15) im Grundwasser verlegt sind.

15. Verfahren nach einem der Ansprüche 1 bis 14, bei dem bei der Abgabe von Wärme das Wärmeträgermedium die Erdkollektoren (14) in der zweiten Wärmespeicherschicht (15) in der Fließrichtung des Grundwassers am Ort dieser Erdkollektoren durchströmt.

16. Verfahren nach einem der Ansprüche 1 bis 15, bei dem von den ersten Erdkollektoren (11) der ersten Wärmespeicherschicht (12) Wärme entzogen und diese Wärme zur Regeneration der zweiten Wärmespeicherschicht (15) von den zweiten Erdkollektoren (14) an das Erdreich abgegeben wird.

17. Verfahren nach einem der Ansprüche 1 bis 16, bei dem die Regeneration der ersten Wärmespeicherschicht (12) und/oder der zweiten Wärmespeicherschicht (15) mit Hilfe von gesammeltem Regenwasser und/oder abgepumptem Grundwasser erfolgt, das der jeweiligen Wärmespeicherschicht gezielt zugeführt wird.

18. Verfahren nach einem der Ansprüche 1 bis 17, bei dem die Wärmespeicherschichten (12, 15) jeweils eine Vielzahl Erdkollektormodule umfassen.

19. Verfahren nach einem der Ansprüche 1 bis 18, bei dem die Wärmespeicherschichten (12, 15) jeweils eine Vielzahl von in Strängen verlegten Rohren oder Rohrschlangen umfassen.

20. Verfahren nach einem der Ansprüche 1 bis 19, bei dem unterhalb der untersten Wärmespeicherschicht eine wasserdämmende oder wasserundurchlässige Schicht angeordnet ist.

21. Verfahren nach einem der Ansprüche 1 bis 20, bei dem mindestens in eine Wärmespeicherschicht Kies oder ein anderes Material mit größerer Wärmespeicherfähigkeit als das originär am Ort der Verlegung der Erdkollektoren vorhandene Erdreich in den Boden eingebaut wird.

22. Verfahren nach einem der Ansprüche 1 bis 21, bei dem das Wärmeträgermedium mittels mehrerer zentraler Förderpumpen durch die Erdkollektoren hindurchgepumpt wird, die entsprechend der jeweiligen Fördermenge zu- oder abgeschaltet und hinsichtlich der Drehzahl gesteuert werden.

23. Verfahren nach einem der Ansprüche 1 bis 22, bei dem die Leitungen von den Erdkollektoren in den mehreren Ebenen hydraulisch getrennt zu einer Energiezentrale geführt sind und die Erdkollektoren (11, 14) in sämtlichen Wärmespeicherschichten zur Gebäudebeheizung und/oder Trinkwarmwasserversorgung in der Energiezentrale mit einer Wärmepumpe (26) verbunden werden, welche die von den Erdkollektoren (11, 14) zugeführte Wärme auf ein höheres Temperaturniveau anhebt und an ein Wärmeübertragungssystem und/oder eine Trinkwarmwasserversorgung im Gebäude (27) abgibt und/oder zum Einspeisen von Regenerationswärme zumindest in die zweite Wärmespeicherschicht (15) die zweiten Erdkollektoren (14) direkt oder über einen Wärmeaustauscher mit dem Wärmeübertragungssystem des Gebäudes (27) oder mit einer anderen Wärmequelle (31) verbunden werden.

24. Verfahren nach einem der Ansprüche 1 bis 23, bei dem mehrere Gebäude über ein Verteilnetz mit den Erdkollektoren (11, 14) verbunden sind.

25. Verfahren nach einem der Ansprüche 1 bis 24, bei dem der Druck in den Erdkollektoren (11, 14) und/oder im Verteilnetz überwacht und bei einem Druckabfall die betreffenden Teile des hydraulischen Systems abgeschaltet werden.

26. Verfahren nach einem der Ansprüche 1 bis 25, bei dem die Temperatur im Verteilnetz und/oder in den Erdkollektoren (11, 14) und/oder im Erdreich überwacht wird.

## Claims

1. A method for utilizing near-surface geothermal heat for heating and/or cooling and/or warming hot drinking water from one or more buildings (27), with ground collectors that are arranged one above the other in multiple heat storage layers, in which heat is withdrawn from the earth by the ground collectors in at least one heat storage layer to heat one or more buildings, and the regeneration of the earth takes place at least temporarily in at least one first heat storage layer (12) containing first ground collectors (11) with the aid of heat supplied to the earth distributed in a planar manner over at least one region of the surface of the earth, and at the same time in at least one second heat storage layer (15) arranged below the first heat storage layer (12) and containing second ground collectors (14) with the aid of heat emission from the second ground collectors (14) to the second heat storage layer (15), wherein the first ground collectors (11) emit no heat or less heat to the first heat storage layer (12) than the second ground collectors (14) emit to the second heat storage layer (15), and heat is withdrawn from the earth at least temporarily by the ground collectors in all heat storage layers (12, 15) to heat buildings.

2. The method according to claim 1, in which the ground collectors comprise at least one of the following embodiments: tubes, coiled tubes, ground-climate exchangers, or spiral collectors, or other ground collector modules that comprise coiled tubes held on carriers, capillary tube mats.

3. The method according to claim 1 or 2, in which the ground collectors are arranged one above the other in more than two heat storage layers.

4. The method according to one of claims 1 to 3, in which, during the entire duration of the regeneration, the earth is regenerated in the first heat storage layer (12) with the aid of heat supplied to the earth distributed in a planar manner over at least a region of the surface of the earth and in the second heat storage layer (15) with the aid of heat emission from the second ground collectors (14), wherein the first ground collectors (11) emit no heat or less heat to the first heat storage layer (12) than the second ground collectors (14) emit to the second heat storage layer (15).

5. The method according to one of claims 1 to 4, in which heat is withdrawn from the earth at least temporarily only by the ground collectors (11, 14) in the warmest heat storage layer to heat buildings (27).

6. The method according to one of claims 1 to 5, in which during the summer the waste heat from the cooling of the building is emitted by the second ground collectors (14) to the second heat storage layer (15), and/or during the winter heat is withdrawn from all heat storage layers through the ground collectors and/or in the transition time heat is withdrawn from the earth only by the ground collectors in the warmer heat storage layer or supplied to the earth through the ground collectors in the colder heat storage layer.

7. The method according to one of claims 1 to 6, in which the regeneration of the first heat storage layer takes place with the aid of solar radiation, precipitation, heat transfer from the ambient air, or other natural processes.

8. The method according to one of claims 1 to 7, in which the ground collectors are laid under an agricultural area.

9. The method according to one of claims 1 to 8, in which the ground collectors are laid under green areas such as parks, orchards, rainwater retention basins, football fields, or other unsealed or partially sealed areas.

10. The method according to one of claims 1 to 9, in which the regeneration of the first heat storage layer (12) takes place with the aid of heat transmission from one or more buildings, streets, parking lots, or other structures.

11. The method according to one of claims 1 to 10, in which the waste heat from cooling the building is used for the regeneration of the second heat storage layer (15).

12. The method according to one of claims 1 to 11, in which heat from at least one of the following systems is used for the regeneration of the second heat storage layer (15): solar thermal energy, air absorber, cogeneration plant, waste process heat, air-water heat pump, recooling plant, fossil or regenerative heat generator.

13. The method according to one of claims 1 to 12, in which additionally heat for the regeneration of the second heat storage layer (15) is supplied through the ground water.

14. The method according to one of claims 1 to 13, in which the ground collectors (14) of the second heat storage layer (15) are laid in the ground water.

15. The method according to one of claims 1 to 14, in which, when heat is emitted, the heat transfer medium flows through the ground collectors (14) in the second heat storage layer (15) in the flow direction of the ground water at the location of these ground collectors.

16. The method according to one of claims 1 to 15, in which heat is withdrawn from the first ground collectors (11) in the first heat storage layer (12) and this heat is emitted by the second ground collectors (14) to the earth for the regeneration of the second heat storage layer (15).

17. The method according to one of claims 1 to 16, in which the regeneration of the first heat storage layer (12) and/or the second heat storage layer (15) takes place with the aid of collected rain water and/or pumped-out ground water that is supplied in a targeted manner to the respective heat storage layer.

18. The method according to one of claims 1 to 17, in which the heat storage layers (12, 15) each comprise a plurality of ground collector modules.

19. The method according to one of claims 1 to 18, in which the heat storage layers (12, 15) each comprise a plurality of tubes or coiled tubes laid in strands.

20. The method according to one of claims 1 to 19, in which a water-damming or water-impermeable layer is arranged below the lowest heat storage layer.

21. The method according to one of claims 1 to 20, in which gravel or another material with a greater heat storage capacity than the earth originally present at the location of the laying of the ground collectors is installed in the ground at least in one heat storage layer.

22. The method according to one of claims 1 to 21, in which the heat transfer medium is pumped through the ground collectors by means of multiple central conveyor pumps that are switched on or switched off and are controlled with regard to rotational speed according to the respective conveyed amount.

23. The method according to one of claims 1 to 22, in which the lines from the ground collectors in the multiple levels are guided, hydraulically separated, to an energy center and the ground collectors (11, 14) in all heat storage layers are connected to a heat pump (26) in the energy center for building heating and/or hot drinking water supply, which heat pump raises the heat supplied by the ground collectors (11, 14) to a higher temperature level and emits it to a heat transmission system and/or a hot drinking water supply in the building (27) and/or the second ground collectors (14) are connected directly or via a heat exchanger to the heat transmission system of the building (27) or to another heat source (31) to feed regeneration heat at least into the second heat storage layer (15).

24. The method according to one of claims 1 to 23, in which multiple buildings are connected to the ground collectors (11, 14) via a distribution network.

25. The method according to one of claims 1 to 24, in which the pressure in the ground collectors (11, 14) and/or in the distribution network is monitored and, in the event of a loss of pressure, the affected parts of the hydraulic system are switched off.

26. The method according to one of claims 1 to 25, in which the temperature in the distribution network and/or in the ground collectors (11, 14) and/or in the earth is monitored.

## Revendications

1. Procédé d'utilisation de la géothermie en surface pour le chauffage et/ou le refroidissement et/ou le réchauffement de l'eau chaude sanitaire d'un ou d'une pluralité de bâtiments (27) avec des collecteurs géothermiques disposés les uns au-dessus des autres dans plusieurs couches de stockage de chaleur, dans lequel, pour le chauffage d'un ou d'une pluralité de bâtiments, de la chaleur est extraite du sol par les collecteurs géothermiques dans au moins une couche de stockage de chaleur et la régénération du sol est effectuée au moins temporairement, dans au moins une première couche de stockage de chaleur (12) contenant des premiers collecteurs géothermiques (11) à l'aide d'une chaleur introduite dans le sol en étant répartie de manière surfacique sur au moins une zone de la surface du sol, et simultanément dans au moins une deuxième couche de stockage de chaleur (15) contenant des deuxièmes collecteurs géothermiques (14) et disposée sous la première couche de stockage de chaleur (12), à l'aide d'une distribution de chaleur des deuxièmes collecteurs géothermiques (14) à la deuxième couche de stockage de chaleur (15), dans lequel les premiers collecteurs géothermiques (11) ne distribuent aucune chaleur à la première couche de stockage de chaleur (12) ou moins de chaleur que les deuxièmes collecteurs géothermiques (14) à la deuxième couche de stockage de chaleur (15), et, pour le chauffage de bâtiments, de la chaleur est extraite du sol au moins temporairement par les collecteurs géothermiques dans toutes les couches de stockage de chaleur (12, 15).

2. Procédé selon la revendication 1, dans lequel les collecteurs géothermiques comportent l'un au moins des modes de réalisation suivants : tuyaux, serpentins, échangeurs climatiques de sol ou collecteurs en spirale ou autres modules de collecteurs géothermiques comportant des serpentins maintenus sur des supports, tapis de tubes capillaires.

3. Procédé selon la revendication 1 ou 2, dans lequel les collecteurs géothermiques sont disposés les uns au-dessus des autres dans plus de deux couches de stockage de chaleur.

4. Procédé selon l'une des revendications 1 à 3, dans lequel, pendant toute la durée de la régénération, le sol est régénéré dans la première couche de stockage de chaleur (12) à l'aide d'une chaleur introduite dans le sol en étant répartie de manière surfacique sur au moins une zone de la surface du sol, et dans la deuxième couche de stockage de chaleur (15) à l'aide d'une distribution de chaleur des deuxièmes collecteurs géothermiques (14), dans lequel les premiers collecteurs géothermiques (11) ne distribuent aucune chaleur à la première couche de stockage de chaleur (12) ou moins de chaleur que les deuxièmes collecteurs géothermiques (14) à la deuxième couche de stockage de chaleur (15).

5. Procédé selon l'une des revendications 1 à 4, dans lequel, pour le chauffage de bâtiments (27), de la chaleur est extraite du sol au moins temporairement uniquement par les collecteurs géothermiques (11, 14) dans la couche de stockage de chaleur la plus chaude.

6. Procédé selon l'une des revendications 1 à 5, dans lequel, pendant l'été, la chaleur résiduelle provenant du refroidissement du bâtiment est distribuée par le biais des deuxièmes collecteurs géothermiques (14) à la deuxième couche de stockage de chaleur (15), et/ou pendant l'hiver, de la chaleur est extraite de toutes les couches de stockage de chaleur par le biais des collecteurs géothermiques, et/ou pendant une période de transition, de la chaleur est extraite du sol uniquement par les collecteurs géothermiques dans la couche de stockage de chaleur plus chaude ou de la chaleur est introduite dans le sol par les collecteurs géothermiques dans la couche de stockage de chaleur plus froide.

7. Procédé selon l'une des revendications 1 à 6, dans lequel la régénération de la première couche de stockage de chaleur est effectuée à l'aide du rayonnement solaire, de précipitations, du transfert de chaleur à partir de l'air ambiant ou d'autres processus naturels.

8. Procédé selon l'une des revendications 1 à 7, dans lequel les collecteurs géothermiques sont posés sous une surface agricole.

9. Procédé selon l'une des revendications 1 à 8, dans lequel les collecteurs géothermiques sont posés sous des espaces verts tels que des parcs, des vergers, des bassins de rétention des eaux pluviales, des terrains de football ou d'autres surfaces non imperméabilisées ou partiellement imperméabilisées.

10. Procédé selon l'une des revendications 1 à 9, dans lequel la régénération de la première couche de stockage de chaleur (12) est effectuée à l'aide d'une transmission de chaleur à partir d'un(e) ou d'une pluralité de bâtiments, de rues, de parkings ou d'autres constructions.

11. Procédé selon l'une des revendications 1 à 10, dans lequel la chaleur résiduelle provenant du refroidissement du bâtiment est utilisée pour la régénération de la deuxième couche de stockage de chaleur (15).

12. Procédé selon l'une des revendications 1 à 11, dans lequel de la chaleur provenant de l'un au moins des systèmes suivants est utilisée pour la régénération de la deuxième couche de stockage de chaleur (15) : énergie solaire thermique, absorbeur d'air, centrale de cogénération, chaleur résiduelle de processus, pompe à chaleur air/eau, bloc de refroidissement, générateur de chaleur fossile ou régénérative.

13. Procédé selon l'une des revendications 1 à 12, dans lequel de la chaleur est en outre fournie par les eaux souterraines pour la régénération de la deuxième couche de stockage de chaleur (15).

14. Procédé selon l'une des revendications 1 à 13, dans lequel les collecteurs géothermiques (14) de la deuxième couche de stockage de chaleur (15) sont posés dans les eaux souterraines.

15. Procédé selon l'une des revendications 1 à 14, dans lequel, lors de la distribution de chaleur, le fluide caloporteur traverse les collecteurs géothermiques (14) dans la deuxième couche de stockage de chaleur (15) dans la direction d'écoulement des eaux souterraines à l'endroit de ces collecteurs géothermiques.

16. Procédé selon l'une des revendications 1 à 15, dans lequel de la chaleur est extraite par les premiers collecteurs géothermiques (11) de la première couche de stockage de chaleur (12) et cette chaleur est introduite dans le sol par les deuxièmes collecteurs géothermiques (14) pour la régénération de la deuxième couche de stockage de chaleur (15).

17. Procédé selon l'une des revendications 1 à 16, dans lequel la régénération de la première couche de stockage de chaleur (12) et/ou de la deuxième couche de stockage de chaleur (15) est effectuée à l'aide d'eau pluviale recueillie et/ou d'eau souterraine pompée, laquelle est fournie de manière ciblée à la couche de stockage de chaleur respective.

18. Procédé selon l'une des revendications 1 à 17, dans lequel les couches de stockage de chaleur (12, 15) comportent respectivement une pluralité de modules de collecteurs géothermiques.

19. Procédé selon l'une des revendications 1 à 18, dans lequel les couches de stockage de chaleur (12, 15) comportent respectivement une pluralité de tuyaux ou de serpentins posés en écheveaux.

20. Procédé selon l'une des revendications 1 à 19, dans lequel une couche faisant barrière à l'eau ou imperméable à l'eau est disposée sous la couche de stockage de chaleur inférieure.

21. Procédé selon l'une des revendications 1 à 20, dans lequel du gravier ou un autre matériau présentant une plus grande capacité de stockage de chaleur que le sol disponible à l'origine sur le lieu d'installation des collecteurs géothermiques est incorporé à la terre dans au moins une couche de stockage de chaleur.

22. Procédé selon l'une des revendications 1 à 21, dans lequel le fluide caloporteur est pompé à travers les collecteurs géothermiques au moyen de plusieurs pompes de circulation centrales, lesquelles sont activées ou désactivées en fonction du débit respectif et commandées quant à la vitesse de rotation.

23. Procédé selon l'une des revendications 1 à 22, dans lequel les conduites partant des collecteurs géothermiques aux différents niveaux sont guidées vers une centrale énergétique tout en étant séparées hydrauliquement et les collecteurs géothermiques (11, 14) dans l'ensemble des couches de stockage de chaleur sont reliés à une pompe à chaleur (26) dans la centrale énergétique pour le chauffage du bâtiment et/ou l'alimentation en eau chaude sanitaire, laquelle augmente la chaleur alimentée par les collecteurs géothermiques (11, 14) à un niveau de température plus élevé et distribue celle-ci à un système de transfert de chaleur et/ou à une alimentation en eau chaude sanitaire dans le bâtiment (27) et/ou les deuxièmes collecteurs géothermiques (14) sont reliés directement ou par le biais d'un échangeur de chaleur au système de transfert de chaleur du bâtiment (27) ou à une autre source de chaleur (31) pour l'introduction de chaleur de régénération au moins dans la deuxième couche de stockage de chaleur (15).

24. Procédé selon l'une des revendications 1 à 23, dans lequel plusieurs bâtiments sont reliés aux collecteurs géothermiques (11, 14) par le biais d'un réseau de distribution.

25. Procédé selon l'une des revendications 1 à 24, dans lequel la pression dans les collecteurs géothermiques (11, 14) et/ou dans le réseau de distribution est surveillée et, en cas de chute de pression, les parties concernées du système hydraulique sont mises hors service.

26. Procédé selon l'une des revendications 1 à 25, dans lequel la température dans le réseau de distribution et/ou dans les collecteurs géothermiques (11, 14) et/ou dans le sol est surveillée.
